# EUROPÄISCHE PATENTSCHRIFT

(11) **EP 3 721 083 B1**
(45) Veröffentlichungstag und Bekanntmachung des Hinweises auf die Patenterteilung: **26.10.2022**
(21) Anmeldenummer: 18811487.0
(22) Anmeldetag: 27.11.2018
(51) Int. Cl.: F03D 80/40, F03D 7/02, F03D 17/00

(54) **VERFAHREN ZUM BETREIBEN EINER WINDENERGIEANLAGE**
METHOD FOR OPERATING A WIND TURBINE
PROCÉDÉ PERMETTANT DE FAIRE FONCTIONNER UNE ÉOLIENNE

(30) Priorität: 07.12.2017 DE 102017129112
(43) Veröffentlichungstag der Anmeldung: 14.10.2020
(73) Patentinhaber: Wobben Properties GmbH, 26607 Aurich (DE)
(72) Erfinder: SCHAPER, Ulf, 27254 Staffhorst (DE)
(74) Vertreter: Eisenführ Speiser
(86) Internationale Anmeldenummer: PCT/EP2018/082643
(87) Internationale Veröffentlichungsnummer: WO 2019/110364

(56) Entgegenhaltungen:
- WO-A1-2004/104412
- US-A1- 2014 091 572
- US-A1- 2015 035 548

## Beschreibung

Die vorliegende Erfindung betrifft ein Verfahren zum Betreiben einer Windenergieanlage sowie eine entsprechende Windenergieanlage.

Unterhalb bestimmter Temperaturen kann es dazu kommen, dass eine Eisbildung an den Rotorblättern einer Windenergieanlage auftritt. Eine derartige Eisbildung bzw. ein Eisansatz ist nicht erwünscht, weil dies zu einer Gefährdung von Personen und Gebäuden in der Umgebung der Windenergieanlage führen kann. Ferner führt eine Eisbildung bzw. ein Eisansatz an den Rotorblättern der Windenergieanlage zu einem veränderten aerodynamischen Verhalten, so dass die Windenergieanlage nicht mehr optimal betrieben werden kann.

WO 2004/104412 A1 beschreibt ein Verfahren zum Betreiben einer Windenergieanlage, wobei die Temperatur in der Umgebung der Windenergieanlage erfasst wird. Ferner werden Betriebsparameter der Windenergieanlage erfasst. Bei einer Abweichung der erfassten Betriebsparameter von gespeicherten Betriebsparametern wird die Außentemperatur überprüft. Falls die Außentemperatur unter einem Grenzwert liegt, kann der Betrieb der Windenergieanlage beeinflusst werden. Falls die Temperatur im Bereich der Windenergieanlage oberhalb des Grenzwertes liegt, können die gespeicherten Parameterwerte an die erfassten Parameterwerte angepasst werden.

Bekannte Verfahren zur Eisansatzerkennung bei Rotorblättern einer Windenergieanlage sind jedoch ungenau, so dass es zu einem vorzeitigen Abschalten der Windenergieanlage kommen kann, obwohl die Rotorblätter der Windenergieanlage nicht mit Eis überzogen sind.

In der prioritätsbegründenden deutschen Patentanmeldung hat das Deutsche Patent- und Markenamt die folgenden Dokumente recherchiert: DE 10 2005 016 524 A1, DE 10 2016 124 554 A1, US 2011/0 089 692 A1, EP 2 828 164 B1 und WO 2004/104412 A1. Weiterer Stand der Technik ist in dem Dokument US 2014/091572 A1 offenbart.

Es ist eine Aufgabe der vorliegenden Erfindung ein Verfahren zum Betreiben einer Windenergieanlage vorzusehen, welches die oben beschriebenen Nachteile behebt. Ferner ist eine Aufgabe der vorliegenden Erfindung ein Verfahren zum Betreiben einer Windenergieanlage vorzusehen, welches einen effektiven Betrieb der Windenergieanlage sowie eine effektive Aktivierung einer Rotorblattheizung ermöglicht. Insbesondere ist es eine Aufgabe der Erfindung ein sicheres Wiedereinschalten der Windenergieanlage zu gewährleisten, wenn eine Eisfreiheit erfasst worden ist.

Diese Aufgabe wird durch ein Verfahren zum Betreiben einer Windenergieanlage gemäß Anspruch 1 sowie durch eine Windenergieanlage nach Anspruch 8 gelöst. Gemäß der Erfindung werden zwei verschiedene Eiserkennungsverfahren zur Eiserkennung an den Rotorblättern der Windenergieanlage parallel eingesetzt. Beide Eiserkennungsverfahren können jeweils separate Warnsignale ausgeben, über weiche die Windenergieanlage im Fall von einer kritischen Vereisung gestoppt werden kann. Wenn dies erfolgt ist, kann die Windenergieanlage optional (sofern eine Rotorblattheizung vorhanden ist) enteist und neu gestartet werden.

Falls das zweite Eiserkennungsverfahren geeignet ist, eine Eisfreiheit der Rotorblätter festzustellen, kann basierend hierauf ein automatischer Wiederanlauf der Windenergieanlage ausgelöst werden. Dies kann insbesondere bei Windenergieanlagen notwendig sein, welche nicht durch eine Rotorblattheizung abgetaut werden können. Ein automatisches Wiederanlaufen der Windenergieanlage durch das zweite Eiserkennungsverfahren kann auch ausgelöst werden, wenn das erste Eiserkennungsverfahren die zurückliegende Vereisung zuerst erkannt oder nicht erkannt hat. Ein Wiederanlaufen ist jedoch nur möglich, wenn das zweite Eiserkennungsverfahren auch vorher eine Vereisung erkannt hat. Gleichzeitig wird erfindungsgemäß im Falle eines Ausfalls des zweiten Eiserkennungsverfahrens nicht die Betriebssicherheit eingeschränkt, welche durch das erste Eiserkennungsverfahren bereitgestellt wird. Somit wird eine Eiserkennung ermöglicht, welche ein Stoppen und ein Wiederanlaufen der Windenergieaniage ermöglicht, ohne die Betriebssicherheit der Windenergieanlage zu gefährden.

Gemäß einem Aspekt der Erfindung wird ein Verfahren zum Betreiben einer Windenergieanlage mit mindestens zwei Rotorblättern vorgesehen. Eine Außentemperatur in einer Umgebung der Windenergieanlage wird erfasst. Betriebsparameter der Windenergieanlage werden erfasst und die erfassten Betriebsparameter werden mit gespeicherten Betriebsparameterwerten verglichen. Ein erstes Warnsignal oder Stoppsignal wird ausgegeben, wenn die erfassten Betriebsparameter von den gespeicherten Betriebsparametern abweichen und die erfasste Außentemperatur unter einen ersten Vereisungsschwellwert fällt. Mindestens eine Eisdicke, Eismasse und/oder Oberflächentemperatur an mindestens einer Stelle an einer Oberfläche des Rotorblatts wird erfasst und die erfasste Eisdicke, Eismasse und/oder Oberflächentemperatur wird mit einem zweiten Vereisungsschwellwert verglichen. Ein zweites Warnsignal wird ausgegeben, wenn die gemessene Eisdicke oder Eismasse über dem zweiten Vereisungsschwellwert liegt. Ein Eingriff in den Betrieb der Windenergieanlage und/oder eine Aktivierung einer Rotorblattheizung erfolgt, wenn das erste oder zweite Warnsignal erfasst worden ist. Eine Deaktivierung der Rotorblattheizung oder eine Deaktivierung des Eingriffs in den Betrieb der Windenergieanlage erfolgt, wenn die mindestens eine erfasste Eisdicke oder Eismasse unterhalb des zweiten Vereisungsschwellwertes oder die Oberflächentemperatur oberhalb des zweiten Vereisungsschwellwertes liegt und vorher das zweite Warnsignal erfasst worden ist.

Optional kann die Rotorblattheizung aktiviert werden, wenn die ausgegebene Leistung unter einem Grenzwert fällt (bei entsprechender Windgeschwindigkeit). Ferner kann die Windenergieanlage gestoppt werden, wenn die Leistung (bei entsprechender Windgeschwindigkeit) unter einen zweiten Grenzwert fällt. Optional kann die Rotorblattheizung aktiviert werden, wenn die Eisdicke oder Eismasse oder Oberflächentemperatur oder Grenzwerte überschreiten oder unterschreiten oder festgelegte Kombinationen dieser Kriterien greifen.

Gemäß einem Aspekt der Erfindung kann die Deaktivierung der Rotorblattheizung zeitlich versetzt nach dem letztmaligen Zutreffen einer der Aktivierungsbedingungen (erstes oder zweites Heizsignal) erfolgen

Die Erfindung betrifft ebenfalls eine Windenergieanlage mit mindestens zwei Rotorblättern. Die Windenergieanlage weist eine erste Eisansatzerkennungseinheit auf, welche dazu ausgestaltet ist, Betriebsparameter der Windenergieanlage mit gespeicherten Betriebsparametern zu vergleichen und ein erstes Warnsignal auszugeben, wenn die erfassten Betriebsparameter von den gespeicherten Betriebsparametern abweichen und eine Außentemperatur im Bereich der Windenergieanlage unter einen ersten Vereisungsschwellwert fällt, und eine zweite Eisansatzerkennungseinheit, welche eine Mehrzahl von Sensoren an den Rotorblättern aufweist, wobei durch die Sensoren jeweils Oberflächentemperaturen und/oder Eismassen und/oder Eisdicken an der Oberfläche des Rotorblattes erfasst werden. Die zweite Eisansatzerkennungseinheit weist eine Basisstation auf, welche dazu ausgestaltet ist, die erfassten Eismassen oder Eisdicken oder Oberflächentemperaturen mit einem zweiten Vereisungsschwellwert zu vergleichen und ein zweites Warnsignal auszugeben, wenn die gemessenen Eismassen oder Eisdicken oder Oberflächentemperaturen über bzw. unter einem zweiten Vereisungsschwellwert liegen.

Ferner ist eine Steuereinheit, welche dazu ausgestaltet ist, in Abhängigkeit des ersten und/oder zweiten Warnsignals in den Betrieb der Windenergieanlage einzugreifen und/oder eine Rotorblattheizung zu aktivieren, wobei die Steuereinheit dazu ausgestaltet ist, die Rotorblattheizung zu deaktivieren oder den Eingriff in den Betrieb der Windenergieanlage zu deaktivieren, wenn die von den Sensoren gemessene Eismassen oder Eisdicken oder Oberflächentemperaturen unterhalb bzw. oberhalb des zweiten Vereisungsschwellwertes liegt und die Steuereinheit vorher ein zweites Warnsignal von der zweiten Eisansatzerkennungseinheit empfangen hat.

Die Erfindung betrifft den Gedanken eine Eisansatzerkennung redundant basierend auf zwei separaten Eiserkennungsverfahren durchzuführen. Dazu wird gemäß einem ersten Eiserkennungsverfahren eine Außentemperatur im Bereich der Windenergieanlage sowie Betriebsparameter der Windenergieanlage erfasst. Die erfassten Betriebsparameter werden mit gespeicherten Betriebsparametern verglichen. Wenn die erfassten Betriebsparameter sich ein vorgegebenes Maß von den gespeicherten Betriebsparametern unterscheiden und die erfasste Außentemperatur im Bereich der Windenergieanlage unterhalb eines ersten Vereisungsschwellwertes liegt, dann kann ein erstes Warnsignal ausgegeben werden. Dieses erste Warnsignal kann auf einen Eisansatz an den Rotorblättern hinweisen. Unabhängig davon wird gemäß einem zweiten Eiserkennungsverfahren eine Oberflächentemperatur des Rotorblattes, eine Eisdicke und/oder eine Eismasse wird an mindestens einer Stelle des Rotorblattes erfasst. Die erfasste Oberflächentemperatur, die erfasste Eisdicke und/oder die erfasste Eismasse wird mit einem zweiten Vereisungsschwellwert verglichen. Wenn die erfasste Temperatur unterhalb bzw. die erfasste Eisdicke und/oder die erfasste Eismasse oberhalb des zweiten Vereisungsschwellwertes liegt, dann wird ein zweites Warnsignal ausgegeben, welches auf eine Vereisung des Rotorblattes hindeuten kann. Wenn das erste und/oder das zweite Warnsignal erfasst worden ist, dann wird in den Betrieb der Windenergieanlage eingegriffen und/oder die Rotorblattheizung wird aktiviert. Ein Eingriff in den Betrieb der Windenergieanlage kann beispielsweise eine Reduzierung der Drehzahl der Windenergieanlage darstellen. Eine Deaktivierung des Eingriffs in die Windenergieanlage erfolgt, wenn die gemessene Oberflächentemperatur oberhalb des zweiten Vereisungsschwellwertes liegt und das zweite Warnsignal vorher erfasst worden ist.

Gemäß einem Aspekt der Erfindung kann beim Stoppen der Anlage das erste Eiserkennungsverfahren nicht mehr arbeiten. Dies führt zu der "Redundanzproblematik", dass nämlich die Windenergieanlage nicht bedingungslos auf ein Wiederanlaufkommando durch das zweite Eiserkennungsverfahren hören darf, da das erste Eiserkennungsverfahren aufgrund des Anlagenstopps dieser Informationen nicht widersprechen könnte, also bei einem bedingungslosen Wiederanlauf keine redundante Eiserkennung mehr vorläge.

Ein Deaktivieren der Rotorblattheizung bzw. ein Wiederanlaufen der Windenergieanlage kann somit in Abhängigkeit der erfassten Oberflächentemperatur und/oder Eismasse und/oder Eisdicke nur dann erfolgen, wenn die erfasste Oberflächentemperatur und/oder Eismasse und/oder Eisdicke vorher den zweiten Vereisungsschwellwertes über- bzw. unterschritten hat. Damit kann sichergestellt werden, dass die erste auf einer Vereisungskennlinie beruhende Überwachung nicht durch die Überwachung der Oberflächentemperatur und/oder Eismasse und/oder Eisdicke ausgehebelt werden kann. Damit wird ein redundantes Verfahren zur Erfassung eines Eisansatzes an den Rotorblättern derWindenergieanlage vorgesehen. Bei der Steuerung der Rotorblattheizung im Normalbetrieb sind keine Redundanzprobleme vorhanden, so dass beide Eiserkennungssysteme einfach parallel laufen können. Die Rotorblattheizung wird aktiviert, wenn zumindest eines der Systeme dies fordert. Die Redundanzproblematik ist aber beim Stoppen der Windenergieanlage vorhanden, da das Kennlinienverfahren (erste Eisansatzerkennung) dann ausfällt und keine Vereisung mehr erkennen kann. In dieser Situation könnte die zweite Eisansatzerkennung bei einer Fehlfunktion einen Wiederanlauf auslösen, ohne dass das erste System dies verhindern könnte.

Gemäß einem Aspekt der vorliegenden Erfindung ist eine erste Erfassungseinheit vorgesehen, welche die Betriebsparameter der Windenergieanlage sowie die Außentemperatur der Windenergieanlage überwacht und ein erstes Warnsignal ausgeben kann. Eine zweite Erfassungseinheit erfasst die Oberflächentemperatur der Rotorblätter und vergleicht diese mit dem zweiten Vereisungsschwellwert. Die zweite Erfassungseinheit kann mit dem ersten Warnsignal mehrere Vereisungsniveaus wie beispielsweise keine Vereisung, eine minimale Vereisung, eine mäßige Vereisung oder eine starke Vereisung ausgeben.

Mit dem erfindungsgemäßen Verfahren kann eine redundante Eisansatzerkennung vorgesehen werden. Gemäß einem Aspekt der vorliegenden Erfindung kann die zweite Erfassungseinheit beispielsweise vier Vereisungsniveaus oder Levels ausgeben.

Die Sensoren zur Erfassung der Oberflächentemperatur des mindestens einen Rotorblattes können Sensoren darstellen, welche in der EP 2 828 164 B1 beschrieben worden sind. Die Sensoren weisen damit eine Temperaturerfassungseinheit, eine drahtlose Kommunikationseinheit, mindestens eine Solarzelle sowie einen Energiespeicher auf. Die gemessenen Temperaturen werden dann drahtlos übertragen. Die Fotovoltaikzelle gewährleistet die Energieversorgung des Sensors und durch den Energiespeicher wird sichergestellt, dass der Sensor auch ohne Licht betrieben werden kann. Der Sensor kann den Oberflächenzustand des Rotorblattes beispielsweise durch vier Oberflächenzustände ausgeben, nämlich freie Oberfläche (keine Vereisung), eine sehr dünne Eisschicht oder Nässe auf dem Rotorblatt, eine Eisschicht zwischen 1 bis 2 mm und eine Eisschicht von größer 10 mm.

Die Erfindung betrifft ferner den Gedanken, eine effektive Eisansatzerkennung sowie ein effektives Wiedereinschalten bzw. Wiederanfahren der Windenergieanlage zu ermöglichen, wenn eine Eisfreiheit erfasst worden ist. Ferner kann eine Rotorblattenteisung beispielsweise mittels einer Heizeinheit gestartet werden. Wenn zu viel Eis an den Rotorblättern vorhanden ist, dann kann die Windenergieanlage gestoppt werden. Ferner kann die Windenergieanlage optional ausgeschaltet werden, wenn die Eisansatzerkennungseinheiten ausgefallen sind und beispielsweise die Temperatur negativ bzw. sich in den Bereich befindet, wo es zu einem Eisansatz kommen kann.

Mit dem erfindungsgemäßen Verfahren zum Betreiben einer Windenergieanlage wird sichergestellt, dass wenn zwei unterschiedliche Eserkennungsverfahren verwendet werden, es nicht zu einer Situation kommt, wo ein Eiserkennungsverfahren Eis erkennt, das andere jedoch nicht und dies dazu führt, dass die Windenergieanlage nicht abgeschaltet wird bzw. die Rotorblattheizung nicht aktiviert wird. Dies gilt insbesondere wenn eins der Eiserkennungsverfahren eine Eisfreiheit bestimmen kann.

Falls eine Eisfreiheit erkannt werden kann, dann kann dies dazu verwendet werden, dass die Windenergieanlage automatisch wieder anläuft sobald die Eisfreiheit gemeldet worden ist.

Gemäß einem weiteren Aspekt der vorliegenden Erfindung kann ein Eiserkennungsverfahren intern in der Windenergieanlage erfolgen während ein weiteres extern erfolgen kann. Gemäß der Erfindung wird dann berücksichtigt, was passiert, wenn das externe Eiserkennungsverfahren fehlerhaft ist bzw. fehlerhaft eine Eisfreiheit meldet.

Gemäß einem Aspekt der vorliegenden Erfindung beruht das erste Eiserkennungsverfahren auf einem Kennlinienverfahren, d.h. eine Abweichung von der normalen Leistungskurve der Windenergieanlage wird erfasst und bei entsprechender Außentemperatur wird auf einen Eisansatz geschlossen. Wenn beispielweise das zweite Eiserkennungsverfahren defekt ist und eine Eisfreiheit signalisiert, während gemäß dem ersten Eiserkennungsverfahren erfasst wurde, dass Eisansatz vorhanden ist, dann kann das erste Eiserkennungsverfahren Vorrang haben, d.h. die Meldung der Eisfreiheit durch das zweite Eiserkennungsverfahren kann ignoriert werden. Insbesondere wird dies dadurch erreicht, dass ein Eisfreiheitssignal durch das zweite Eiserkennungsverfahren nur dann als zulässig angesehen wird, wenn das zweite Eiserkennungsverfahren vorab einen Eisansatz erfasst hat. Wenn dies nicht der Fall ist, dann ist davon auszugehen, dass das zweite Eiserkennungsverfahren defekt ist und somit ist ein Wiederanfahren zu vermeiden, da nach wie vor voraussichtlich Eisansatz an den Rotorblättern vorhanden ist.

Gemäß einem Aspekt der vorliegenden Erfindung kann die zweite Eisansatzerkennungseinheit, welche eine Mehrzahl von Sensoren an einer Oberfläche der Rotorblätter aufweist, nicht nur die Oberflächentemperatur sondern auch eine Eisdicke bestimmen. Dies kann insbesondere durch eine kapazitive Messung bzw. eine Änderung der Frequenz der Schwingung des Rotorblattes erfolgen. Mit anderen Worten, die Eisdicke wird durch eine Änderung der Kapazität bestimmt.

Gemäß einem alternativen Aspekt der vorliegenden Erfindung kann die zweite Eisansatzerkennungseinheit eine Mehrzahl von Schwingungssensoren aufweisen, welche die Schwingungen des Rotorblatts erfassen. Basierend auf diesen erfassten Schwingungen kann beispielsweise durch einen Vergleich mit einem Schwellwert eine abweichende Schwingung erfasst werden, welche wiederum auf einen Eisansatz hindeuten kann. Gemäß einem Aspekt der vorliegenden Erfindung kann für die Steuerung der Rotorblattheizung auf die Informationen der Sensoren der zweiten Eisansatzerkennungseinheit zurückgegriffen werden, nämlich die Oberflächentemperatur und die Eisdicke.

Gemäß der Erfindung kann die Rotorblattbeheizung anhand der erfassten Oberflächentemperatur und/oder basierend auf der erfassten Eisdicke erfolgen.

Gemäß einem weiteren Aspekt der vorliegenden Erfindung können die erfassten Oberflächentemperaturen und/oder die erfassten Eisdicken gespeichert werden, um sie ggf. später auszuwerten.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem Ausführungsbeispiel der Erfindung,
- Fig. 2: zeigt ein Blockschaltbild der Eisansatzerkennungseinheiten sowie der Steuereinheit der Windenergieanlage und
- Fig. 3: zeigt ein Blockschaltbild der zweiten Eisansatzerkennungseinheit.

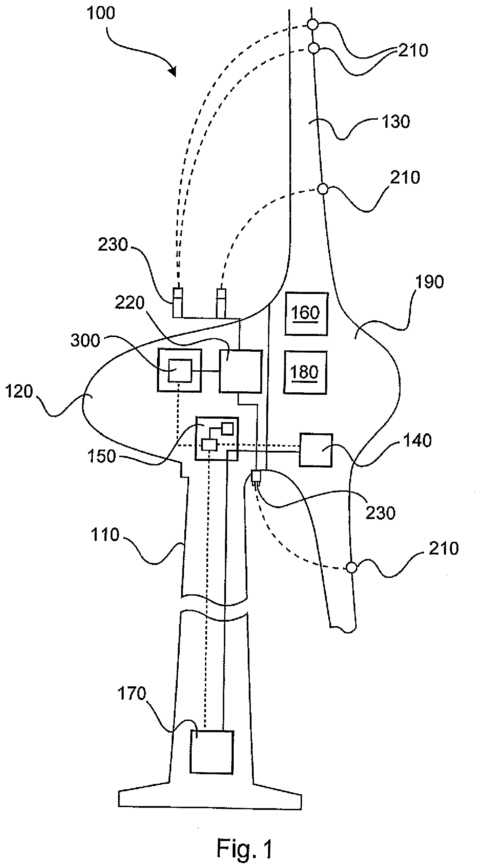

Fig. 1 zeigt eine schematische Darstellung einer Windenergieanlage gemäß einem Ausführungsbeispiel der Erfindung. Die Windenergieanlage 100 weist einen Turm 110, eine Gondel 120 sowie mehrere Rotorblätter 130 auf. Die Rotorblätter 130 sind mit dem Rotor 190 verbunden und setzen den aerodynamischen Rotor 190 in eine Drehbewegung, wenn ausreichend Wind vorhanden ist. Der Rotor 190 ist mit einem elektrischen Generator gekoppelt, dessen Rotor durch Drehung des aerodynamischen Rotors in Bewegung versetzt wird, so dass elektrische Energie erzeugt wird. Die Windenergieanlage weist eine Blattverstelleinheit 140 auf, mittels welcher die Blattwinkel bzw. Pitchwinkel der Rotorblätter 130 verstellt werden können. Ferner kann optional ein Gondelsteuerschrank 150 in der Gondel 120 vorgesehen sein, mittels welcher die Komponenten der Windenergieanlage im Bereich der Gondel gesteuert werden können. Im Bereich des Fußes des Turms 110 kann ein Steuerschrank 170 vorgesehen sein, welcher Leistungselektronikbauteile aufweist, um die durch den Generator 180 erzeugte elektrische Energie an ein externes Versorgungsnetz abzugeben.

Gemäß der Erfindung werden zwei verschiedene Eiserkennungsverfahren zur Eiserkennung an den Rotorblättern 130 der Windenergieanlage 100 parallel eingesetzt. Beide Eiserkennungsverfahren können jeweils separate Warnsignale oder Stoppsignale ausgeben, über welche die Windenergieanlage im Fall von einer kritischen Vereisung gestoppt werden kann. Wenn dies geschehen erfolgt ist, kann die Windenergieanlage optional (sofern eine Rotorblattheizung vorhanden ist) enteist und neu gestartet werden.

Falls das zweite Eiserkennungsverfahren geeignet ist, eine Eisfreiheit der Rotorblätter festzustellen, kann basierend auf einem "Eisfreiheitssignal" ein automatischer Wiederanlauf der Windenergieanlage ausgelöst werden. Dies kann insbesondere bei Windenergieanlagen notwendig sein, welche nicht durch eine Rotorblattheizung abgetaut werden können. Ein automatisches Wiederanlaufen der Windenergieanlage durch das zweite Eiserkennungsverfahren kann auch ausgelöst werden, wenn das erste Eiserkennungsverfahren die zurückliegende Vereisung zuerst erkannt hat. Gleichzeitig wird erfindungsgemäß im Falle eines Ausfalls des zweiten Eiserkennungsverfahrens nicht die Sicherheit aufgehoben, welche durch das erste Eiserkennungsverfahren geboten wird. Somit wird eine Eiserkennung ermöglicht, welche ein Stoppen und ein Wiederanlaufen der Windenergieanlage ermöglicht, ohne die Betriebssicherheit der Windenergieanlage zu gefährden.

Gemäß der Erfindung weist die Windenergieanlage eine erste Eisansatzerkennungseinheit 300 auf, welche die Außentemperatur im Bereich der Windenergieanlage sowie Betriebsparameter der Windenergieanlage erfasst und die erfassten Betriebsparameter mit gespeicherten Betriebsparametern vergleicht. Wenn die erfassten Betriebsparameter um ein vorgegebenes Maß von den speicherten Betriebsparametern abweichen und die Außentemperatur unter einen Vereisungsschwellwert sinkt, dann kann ein erstes Warnsignal ausgegeben werden. Dieses erste Eiserkennungsverfahren kann nur eingesetzt werden, wenn sich der Rotor dreht. Bei Stillstand der Windenergieanlage liefert das erste Eiserkennungsverfahren keine Ergebnisse. Die Funktion der ersten Eisansatzerkennungseinheit 300 ist näher in WO 2004/104412 A1 beschrieben.

Die Windenergieanlage weist eine zweite Eisansatzerkennungseinheit 200 auf, welche eine Mehrzahl von Sensoren 210 an den Rotorblättern 130 aufweist. Diese Sensoren erfassen eine Oberflächentemperatur des Rotorblattes und/oder die Eismasse und/oder die Eisdicke und übertragen diese Werte an eine Basisstation. Die Funktion dieser Sensoren ist in EP 2 828 164 B1 detailliert beschrieben.

Die Eisansatzerkennungseinheit 200 weist eine Basisstation 220 sowie mehrere Antennen oder Übertragungseinheiten 230 zum Erfassen der durch die Sensoren 210 übertragenen Signale auf. In der Basisstation 220 werden die erfassten Temperatursignale mit einem Vereisungsschwellwert verglichen und ein zweites Warnsignal kann ausgegeben werden, wenn die erfasste Temperatur unterhalb des Vereisungsschwellwertes liegt und/oder eine Eismasse und/oder Eisdicke oberhalb des Vereisungsschwellwertes liegt.

Optional können die Sensoren 210 vier verschiedene Level oder Niveaus ausgeben, welche auf einen unterschiedlichen Eisansatz hindeuten. Diese Levels oder Niveaus können einen nicht vorhandenen Eisansatz, einen geringen Eisansatz, einen mäßigen Eisansatz oder einen starken Eisansatz bzw. Eisbildung darstellen.

Das erste und zweite Warnsignal oder Stoppsignal kann an den Gondelsteuerschrank 150 ausgegeben werden. Sobald der Gondeisteuerschrank das erste oder zweite Warnsignal empfängt, kann er den Betrieb der Windenergieanlage einschränken, beispielsweise indem die Drehzahl reduziert wird oder eine Rotorblattheizung 160 kann aktiviert werden, um die Rotorblätter aufzuheizen und damit zu enteisen.

Mit dem erfindungsgemäßen System kann somit eine redundante Eisansatzerkennung vorgesehen werden. Ein Wiederanfahren der Windenergieanlage oder eine Deaktivierung der Rotorblattheizung kann dann basierend auf den Messwerten der Eisansatzerkennungseinheit 200 nur erfolgen, wenn diese vorher einen Eisansatz festgestellt hat.

Zur Vermeidung eines Eisaufbaus eine Rotorblattheizung auch präventiv angesteuert werden. Auch eine solche Blattbeheizung wird durch die Eiserkennungsverfahren ausgelöst, wobei niedrigere Schwellwerte und/oder andere Entscheidungsalgorithmen genutzt werden. Die Signale der beiden Eiserkennungsverfahren zur Aktivierung der Rotorblattbeheizung während des Anlagenbetriebs können ein erstes Heizsignal und zweites Heizsignal darstellen.

Das zweite Eiserkennungsverfahren kann auf punktweise Eisdickenmessungen an einer oder mehreren Stellen des Rotorblattes beruhen. Hierbei können die Messungen auf eine Messung einer Kapazität oder einer Kapazitätsänderung beruhen. Des Weiteren können optional Messungen der Blattoberflächentemperatur erfolgen. Eine Vereisung kann festgestellt werden, wenn ein hoher Eisdickenschwellwert an wenigen Stellen des Rotorblattes oder ein mittlerer Eisdickenschwellwert an vielen Stellen des Rotorblatts überschritten wird. eine Eisfreiheit kann optional festgestellt werden, wenn ausreichend viele Messpunkte vorliegen und nirgends am Rotorblatt der mittlere Eisdickenschwellwert überschritten wird.

Die Blattheizung kann aktiviert werden, wenn die niedrigste gemessene Blattoberflächentemperatur einen Schwellwert unterschreitet und gleichzeitig ein bestimmter Anteil der Rotorblattoberfläche eine bestimmte Eisdicke überschreitet.

Alternativ dazu kann eine Eisdicke auch basierend auf der Änderung des Rotorblattschwingungsverhaltens ermittelt. Beschleunigungssensoren in den Rotorblättern können die Rotorblattvibrationsfrequenzen messen. Durch einen Vergleich der gemessenen Frequenzen mit gespeicherten Vibrationsfrequenzen im eisfreien Zustand und geeignete Korrekturen kann auf eine Massenerhöhung (und damit die Vereisung) geschlossen werden. Eine derart ermittelte Massenerhöhung (=Eismasse) wird mit unterschiedlichen Grenzwerten verglichen, woraus sich Vereisungssignale (Warnsignale), Eisfreiheitssignale (Wiederanlaufsignale) und Rotorblattheizungssignale ergeben können.

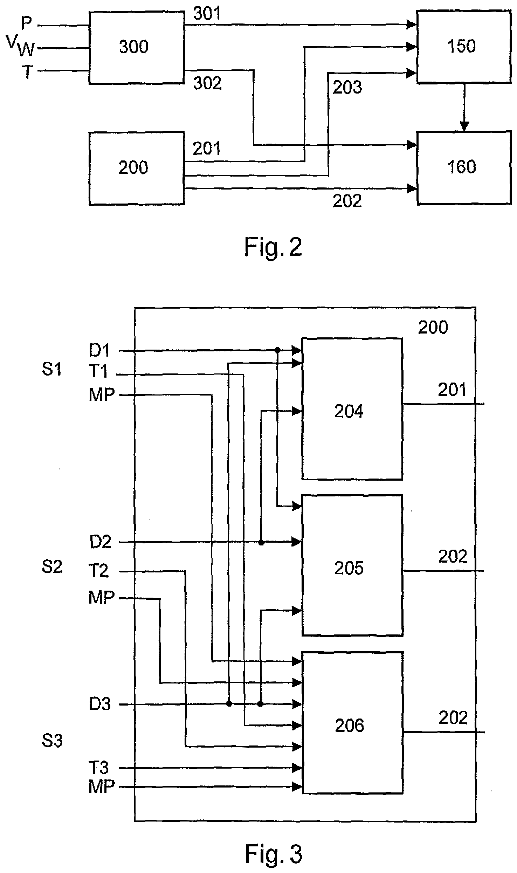

Fig. 2 zeigt ein Blockschaltbild der Eisansatzerkennungseinheiten sowie der Steuereinheit der Windenergieanlage. Insbesondere ist die erste und zweite Eisansatzerkennungseinheit 300, 200, die Steuereinheit 150 der Windenergieanlage sowie die Rotorblattbeheizung 160 dargestellt. Die erste Eisansatzerkennungseinheit 300 empfängt beispielsweise die aktuelle Leistung der Windenergieanlage, die Windgeschwindigkeit und beispielsweise eine Temperatur im Bereich der Windenergieanlage. Die erste Eisansatzerkennungseinheit 300 kann entweder eine kritische Vereisung 301 oder eine beginnende Vereisung 302 ausgeben. Das Signal der kritischen Vereisung 301 wird an die Steuereinheit 150 ausgegeben und das Signal einer beginnenden Vereisung 302 wird an die Rotorblattheizung 160 ausgegeben.

Fig. 3 zeigt ein Blockschaltbild der zweiten Eisansatzerkennungseinheit. Die zweite Eisansatzerkennungseinheit 200 liefert optional drei unterschiedliche Ausgangssignale, nämlich kritische Vereisung 201, Eisfreiheit 203 und Beginn der Vereisung 202. Die kritische Vereisung 201 und die Eisfreiheit 203 wird an die Steuereinheit 150 ausgegeben und das Signal Beginn der Vereisung 202 wird an die Rotorblattheizung 160 ausgegeben. Die Steuereinheit 150 dient der Steuerung der Windenergieanlage und kann insbesondere die Windenergieanlage starten oder stoppen. Ferner dient sie der Steuerung der Rotorblattheizung. Der Start der Windenergieanlage wird durch die Steuereinheit 150 dann freigegeben, wenn ein Signal 203 für die Eisfreiheit empfangen wird.

Die zweite Eisansatzerkennungseinheit 200 weist eine erste Erkennungseinheit zur Erfassung einer kritischen Vereisung 204, eine zweite Erkennungseinheit zur Erfassung von Eisfreiheit 205 sowie eine dritte Erkennungseinheit 206 zur Bestimmung einer beginnenden Vereisung. Die erste Erkennungseinheit 204 empfängt die Eisdickensignale D1-D3 von den Sensoren S1-S3 und ermittelt anhand dieser Daten, ob eine kritische Vereisung vorhanden ist oder nicht. Wenn dicke Schichten auf den Sensoren erkannt worden sind, dann kann dies nur eine dicke Eisschicht darstellen, so dass das Signal 201 ausgegeben wird.

Die zweite Erkennungseinheit 205 erhält ebenfalls die Eisdickensignale der Sensoren. Wenn keine Schichten bzw. wenn die Eisdicke gering ist bzw. unter einem Schwellwert ist, dann kann von einer Eisfreiheit ausgegangen werden und ein Eisfreiheitssignal 203 wird ausgegeben.

Die dritte Erkennungseinheit 206 dient der Steuerung der Rotorblattheizung. Hierbei wird insbesondere die Eisdickenmessung und die Temperaturmessung berücksichtigt. Ferner kann optional auch die Position der Sensoren mit berücksichtigt werden.

Insbesondere können nur diejenigen Sensoren ausgewertet werden, welche an einer Montageposition sitzen, welche durch die Rotorblattheizung beeinflusst werden kann.

Die zweite Eisansatzerkennungseinheit 200 kann aktiviert werden, wenn die Funktionsweise der ersten Eisansatzerkennungseinheit 300 aufgrund von meteorologischen Bedingungen z. B. aufgrund zu niedriger oder zu hoher Windgeschwindigkeit, besonderer Situationen wie großer Windscherung oder Hangströmung eingeschränkt ist.

## Patentansprüche

1. Verfahren zum Betreiben einer Windenergieanlage, welche mindestens zwei Rotorblätter aufweist, mit den Schritten:
Durchführen eines ersten Eiserkennungsverfahrens durch eine erste Eisansatzerkennungseinheit (300),
Ausgeben eines ersten Warnsignals, wenn durch das erste Eiserkennungsverfahren ein Eisansatz an einem der Rotorblätter (130) erkannt wird, der einen ersten Schwellwert überschreitet,
Durchführen eines zweiten Eiserkennungsverfahrens durch eine zweite Eisansatzerkennungseinheit (200),
Ausgeben eines zweiten Warnsignals, wenn durch das zweite Eiserkennungsverfahren ein Eisansatz an einem der Rotorblätter (130) erkannt wird, der einen zweiten Schwellwert überschreitet,
Ausgeben eines Freigabesignals, wenn durch das zweite Eiserkennungsverfahren eine Eisfreiheit an den mindestens zwei Rotorblättern (130) erkannt wird,
Eingreifen in den Betrieb der Windenergieanlage durch eine Steuereinheit (150), wenn das erste oder zweite Warnsignal erfasst worden ist; und
Deaktivierung des Eingriffs in den Betrieb der Windenergieanlage durch die Steuereinheit (150), wenn die Steuereinheit (150) das Freigabesignal empfängt und vorher das zweite Warnsignal empfangen hat.

2. Verfahren zum Betreiben einer Windenergieanlage nach Anspruch 1, wobei:
das Durchführen des ersten Eiserkennungsverfahrens folgende Schritte umfasst:
Erfassen einer Außentemperatur in einer Umgebung der Windenergieanlage durch die erste Eisansatzerkennungseinheit (300),
Erfassen von Betriebsparametern der Windenergieanlage durch die erste Eisansatzerkennungseinheit (300),
Vergleichen der erfassten Betriebsparameter mit gespeicherten Werten der Betriebsparameter durch die erste Eisansatzerkennungseinheit (300), und
Ausgeben eines ersten Warnsignals, wenn die erfassten Betriebsparameter von den gespeicherten Betriebsparametern abweichen und die erfasste Außentemperatur unter einen ersten Vereisungs-Schwellwert fällt.

3. Verfahren zum Betreiben einer Windenergieanlage nach Anspruch 1 oder 2, wobei das Durchführen des zweiten Eiserkennungsverfahrens folgende Schritte umfasst:
Erfassen einer Eisdicke oder Eismasse eines Eisansatzes auf den mindestens zwei Rotorblättern (130) an mindestens eine Stelle an einer Oberfläche des Rotorblatts durch die zweite Eisansatzerkennungseinheit (200),
Vergleichen der mindestens einen erfassten Eisdicke oder Eismasse mit einem zweiten Vereisungs-Schwellwert durch die zweite Eisansatzerkennungseinheit (200),
Ausgeben eines zweiten Warnsignals, wenn die erfasste Eisdicke oder Eismasse über dem zweiten Vereisungs-Schwellwert liegt, und
Ausgeben des Freigabesignals, wenn keine Eisdicke erfasst wurde oder wenn die erfasste Eisdicke oder Eismasse unter einem Schwellwert liegt.

4. Verfahren zum Betreiben einer Windenergieanlage nach einem der Ansprüche 1 bis 3, mit den Schritten:
Erfassen mindestens einer Oberflächentemperatur durch die zweite Eisansatzerkennungseinheit (200) an denjenigen Stellen an der Oberfläche des Rotorblatts, an welchen eine Rotorblattbeheizung zu einer Erwärmung der Oberfläche an diesen Stellen führen kann.

5. Verfahren zum Betreiben einer Windenergieanlage nach Anspruch 3, wobei
das erste Warnsignal der ersten Eisansatzerkennungseinheit (300) auf eine kritische Vereisung des Rotorblattes oder auf eine beginnende Vereisung des Rotorblattes hinweist,
wobei das zweite Warnsignal der zweiten Eisansatzerkennungseinheit (200) auf eine kritische Vereisung hinweist, und
wobei das Freigabesignal auf eine Eisfreiheit der mindestens zwei Rotorblätter hinweist.

6. Verfahren zum Betreiben einer Windenergieanlage nach einem der Ansprüche 1 bis 5, wobei
eine Rotorblattheizung aktiviert wird, wenn das erste und/oder zweite Warnsignal auf eine beginnende Vereisung hinweist.

7. Verfahren zum Betreiben einer Windenergieanlage nach einem der Ansprüche 1 bis 6, mit den Schritten:
Aktivieren der zweiten Eisansatzerkennungseinheit (200) wenn die Funktionsweise der ersten Eisansatzerkennungseinheit (300) aufgrund von meteorologischen Bedingungen eingeschränkt ist.

8. Windenergieanlage, mit
mindestens zwei Rotorblättern (130),
einer ersten Eisansatzerkennungseinheit (300), welche dazu ausgestaltet ist, ein erstes Eiserkennungsverfahren durchzuführen und ein erstes Warnsignal auszugeben, wenn ein Eisansatz an einem der Rotorblätter (130) erkannt wird, der einen ersten Schwellwert überschreitet,
einer zweiten Eisansatzerkennungseinheit (200), welche dazu ausgestaltet ist, ein zweites Eiserkennungsverfahren durchzuführen, ein zweites Warnsignal auszugeben, wenn durch das zweite Eiserkennungsverfahren ein Eisansatz an einem der Rotorblätter (130) erkannt wird, der einen zweiten Schwellwert überschreitet, und ein Freigabesignal auszugeben, wenn eine Eisfreiheit an den mindestens zwei Rotorblättern (130) erkannt wird, und
einer Steuereinheit (150), welche dazu ausgestaltet ist, in Abhängigkeit des ersten und/oder zweiten Warnsignals in den Betrieb der Windenergieanlage einzugreifen, und den Eingriff in den Betrieb der Windenergieanlage durch die Steuereinheit (150) zu deaktivieren, wenn die Steuereinheit (150) das Freigabesignal empfängt und vorher das zweite Warnsignal empfangen hat.

9. Windenergieanlage nach Anspruch 8, wobei
die zweite Eisansatzerkennungseinheit (200) eine Mehrzahl von Sensoren (210) an der Oberfläche der Rotorblätter (130) aufweist, welche mittels eines kapazitiven Messverfahrens, eine Eisdicke auf den Rotorblättern (130) erfasst.

10. Windenergieanlage nach Anspruche 8, wobei
die zweite Eisansatzerkennungseinheit (200) mindestens einen Schwingungssensor aufweist, welcher eine Schwingung eines Rotorblatts erfasst,
wobei die zweite Eisansatzerkennungseinheit (200) dazu ausgestaltet ist, basierend auf der erfassten Schwingung des Rotorblatts oder einer Schwingungsänderung des Rotorblatts eine Eisdicke des Eisansatzes oder eine Eisfreiheit zu bestimmen.

## Claims

1. A method of operating a wind turbine which has at least two rotor blades, comprising the steps:
carrying out a first ice detection method by a first ice accretion detection unit (300),
outputting a first warning signal if an ice accretion is detected at one of the rotor blades (130), that exceeds a first threshold value, by the first ice detection method,
carrying out a second ice detection method by a second ice accretion detection unit (200),
outputting a second warning signal if an ice accretion is detected at one of the rotor blades (130), that exceeds a second threshold value, by the second ice detection method,
outputting an enable signal if freedom from ice is detected at the at least two rotor blades (130) by the second ice detection method,
intervening in the operation of the wind turbine by the control unit (150) if the first or second warning signal has been detected, and
deactivating intervention in the operation of the wind turbine by the control unit (150) if the control unit (150) receives an enable signal and has previously received the second warning signal.

2. A method of operating a wind turbine according to claim 1 wherein:
performance of the first ice detection method includes the following steps:
detecting an outside temperature in the surroundings of the wind turbine by a first ice accretion detection unit (300),
detecting operating parameters of the wind turbine by the first ice accretion detection unit (300),
comparing the detected operating parameters with stored values of the operating parameters by the first ice accretion detection unit (300), and
outputting a first warning signal if the detected operating parameters differ from the stored operating parameters and the detected outside temperature falls below a first icing threshold value.

3. A method of operating a wind turbine according to claim 1 or claim 2 wherein
performance of the second ice detection method includes the following steps:
detecting an ice thickness or ice mass of an ice accretion on the at least two rotor blades (130) at at least one location on a surface of the rotor blade by a second ice accretion detection unit (200),
comparing the at least one detected ice thickness or ice mass with a second icing threshold value by the second ice accretion detection unit (200),
outputting a second warning signal if the detected ice thickness or ice mass is above the second icing threshold value, and
outputting an enable signal if no ice thickness was detected or if the detected ice thickness or ice mass is below a threshold value.

4. A method of operating a wind turbine according to one of claims 1 to 3 comprising the steps:
detecting at least one surface temperature by the second ice accretion detection unit (200) at those locations on the surface of the rotor blade, at which rotor blade heating can lead to an increase in temperature of the surface at those locations.

5. A method of operating a wind turbine according to claim 3 wherein
the first warning signal of the first ice accretion detection unit (300) indicates critical icing of the rotor blade or a beginning of icing of the rotor blade,
wherein the second warning signal of the second ice accretion detection unit (200) indicates critical icing, and
wherein the enable signal indicates freedom from ice on the at least two rotor blades.

6. A method of operating a wind turbine according to one of claims 1 to 5 wherein
the rotor blade heating is activated if the first and/or second warning signal indicates a beginning of icing.

7. A method of operating a wind turbine according to one of claims 1 to 6 comprising the step:
activating the second ice accretion detection unit (200) if the functioning of the first ice accretion detection unit (300) is limited because of meteorological conditions.

8. A wind turbine comprising
at least two rotor blades (130),
a first ice accretion detection unit (300) adapted to perform a first ice detection method and to output a first warning signal if an ice accretion which exceeds a first threshold value is detected at one of the rotor blades (130),
a second ice accretion detection unit (200) adapted to perform a second ice detection method, output a second warning signal if ice accretion which exceeds a second threshold value is detected at one of the rotor blades (130) by the second ice detection method and output an enable signal if a freedom from ice is detected at the at least two rotor blades (130), and
a control unit (150) adapted in dependence on the first and/or second warning signal to intervene in operation of the wind turbine and to deactivate the intervention in operation of the wind turbine by the control unit (150) if the control unit (150) receives an enable signal and has previously received the second warning signal.

9. A wind turbine according to claim 8 wherein
the second ice accretion detection unit (200) has a plurality of the sensors (210) on the surface of the rotor blades (130), which by means of a capacitive measurement method detects an ice thickness on the rotor blades (130).

10. A wind turbine according to claim 8 wherein
the second ice accretion detection unit (200) has at least one oscillation sensor which detected an oscillation of a rotor blade,
wherein the second ice accretion detection unit (200) is adapted to determine an ice thickness of the ice accretion or freedom from ice based on the detected oscillation of the rotor blade or a change in oscillation of the rotor blade.

## Revendications

1. Procédé pour faire fonctionner une éolienne, laquelle présente au moins deux pales de rotor, avec les étapes :
de mise en œuvre d'un premier procédé de détection de givre par une première unité de détection de formation de givre (300),
d'émission d'un premier signal d'avertissement, lorsqu'une formation de givre sur une des pales de rotor (130), qui dépasse une première valeur de seuil, est détectée par le premier procédé de détection de givre,
de mise en œuvre d'un deuxième procédé de détection de givre par une deuxième unité de détection de formation de givre (200),
d'émission d'un deuxième signal d'avertissement, lorsqu'une formation de givre sur une des pales de rotor (130), qui dépasse une deuxième valeur de seuil, est détectée par le deuxième procédé de détection de givre,
d'émission d'un signal d'autorisation, lorsqu'une absence de givre sur les au moins deux pales de rotor (130) est détectée par le deuxième procédé de détection de givre,
d'intervention dans le fonctionnement de l'éolienne par une unité de commande (150), lorsque le premier ou deuxième signal d'avertissement a été acquis ; et
de désactivation de l'intervention dans le fonctionnement de l'éolienne par l'unité de commande (150), lorsque l'unité de commande (150) reçoit le signal d'autorisation et a préalablement reçu le deuxième signal d'avertissement.

2. Procédé pour faire fonctionner une éolienne selon la revendication 1, dans lequel :
la mise en œuvre du premier procédé de détection de givre comprend les étapes suivantes :
l'acquisition d'une température extérieure dans un environnement de l'éolienne par la première unité de détection de formation de givre (300),
l'acquisition de paramètres de fonctionnement de l'éolienne par la première unité de détection de formation de givre (300),
la comparaison des paramètres de fonctionnement acquis à des valeurs mises en mémoire des paramètres de fonctionnement par la première unité de détection de formation de givre (300), et
l'émission d'un premier signal d'avertissement, lorsque les paramètres de fonctionnement acquis diffèrent des paramètres de fonctionnement mis en mémoire et que la température extérieure acquise tombe au-dessous d'une première valeur de seuil de givrage.

3. Procédé pour faire fonctionner une éolienne selon la revendication 1 ou 2, dans lequel la mise en œuvre du deuxième procédé de détection de givre comprend les étapes suivantes :
l'acquisition d'une épaisseur de givre ou masse de givre d'une formation de givre sur les au moins deux pales de rotor (130) au niveau d'au moins un emplacement sur une surface de la pale de rotor par la deuxième unité de détection de formation de givre (200),
la comparaison de la au moins une épaisseur de givre ou masse de givre acquise à une deuxième valeur de seuil de givrage par la deuxième unité de détection de formation de givre (200),
l'émission d'un deuxième signal d'avertissement, lorsque l'épaisseur de givre ou la masse de givre acquise se situe au-dessus de la deuxième valeur de seuil de givrage, et
l'émission du signal d'autorisation, lorsqu'aucune épaisseur de givre n'a été acquise ou lorsque l'épaisseur de givre ou la masse de givre acquise se situe au-dessous d'une valeur de seuil.

4. Procédé pour faire fonctionner une éolienne selon l'une quelconque des revendications 1 à 3, avec les étapes :
d'acquisition d'au moins une température superficielle par la deuxième unité de détection de formation de givre (200) aux emplacements sur la surface de la pale de rotor au niveau desquels un chauffage de pale de rotor peut entraîner un réchauffement de la surface au niveau de ces emplacements.

5. Procédé pour faire fonctionner une éolienne selon la revendication 3, dans lequel
le premier signal d'avertissement de la première unité de détection de formation de givre (300) indique un givrage critique de la pale de rotor ou un début de givrage de la pale de rotor,
dans lequel le deuxième signal d'avertissement de la deuxième unité de détection de formation de givre (200) indique un givrage critique, et
dans lequel le signal d'autorisation indique une absence de givre des au moins deux pales de rotor.

6. Procédé pour faire fonctionner une éolienne selon l'une quelconque des revendications 1 à 5, dans lequel
un chauffage de pale de rotor est activé lorsque le premier et/ou deuxième signal d'avertissement indique un début de givrage.

7. Procédé pour faire fonctionner une éolienne selon l'une quelconque des revendications 1 à 6, avec les étapes :
d'activation de la deuxième unité de détection de formation de givre (200) lorsque le fonctionnement de la première unité de détection de formation de givre (300) est limité en raison de conditions météorologiques.

8. Eolienne, avec
au moins deux pales de rotor (130),
une première unité de détection de formation de givre (300), laquelle est conçue pour mettre en œuvre un premier procédé de détection de givre et pour émettre un premier signal d'avertissement, lorsqu'une formation de givre sur une des pales de rotor (130), qui dépasse une première valeur de seuil, est détectée,
une deuxième unité de détection de formation de givre (200), laquelle est conçue pour mettre en œuvre un deuxième procédé de détection de givre, pour émettre un deuxième signal d'avertissement, lorsqu'une formation de givre, qui dépasse une deuxième valeur de seuil, est détectée sur une des pales de rotor (130) par le deuxième procédé de détection de givre, et pour émettre un signal d'autorisation, lorsqu'une absence de givre sur les au moins deux pales de rotor (130) est détectée, et
une unité de commande (150), laquelle est conçue pour intervenir dans le fonctionnement de l'éolienne en fonction du premier et/ou deuxième signal d'avertissement, et pour désactiver l'intervention dans le fonctionnement de l'éolienne par l'unité de commande (150), lorsque l'unité de commande (150) reçoit le signal d'autorisation et a préalablement reçu le deuxième signal d'avertissement.

9. Eolienne selon la revendication 8, dans laquelle
la deuxième unité de détection de formation de givre (200) présente une pluralité de capteurs (210) sur la surface des pales de rotor (130), laquelle acquiert au moyen d'un procédé de mesure capacitive une épaisseur de givre sur les pales de rotor (130).

10. Eolienne selon la revendication 8, dans laquelle
la deuxième unité de détection de formation de givre (200) présente au moins un capteur de vibration, lequel acquiert une vibration d'une pale de rotor,
dans laquelle la deuxième unité de détection de formation de givre (200) est conçue pour déterminer sur la base de la vibration acquise de la pale de rotor ou d'une modification de vibration de la pale de rotor une épaisseur de givre de la formation de givre ou une absence de givre.
